# EUROPEAN PATENT APPLICATION

(11) **EP 3 780 707 A1**
(43) Date of publication of application: **17.02.2021**
(21) Application number: 18916197.9
(22) Date of filing: 23.04.2018
(51) Int. Cl.: H04W 24/10

(54) **METHOD AND DEVICE FOR CONFIGURING AND REPORTING MEASUREMENT, BASE STATION, AND USER EQUIPMENT**

(71) Applicant: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2018/084114
(87) International publication number: WO 2019/204965

(57) **Abstract**

The present disclosure is related to a method and a device for configuring a measurement, a method and a device for reporting a measurement, a base station, user equipment, and a computer readable storage medium. The method for configuring a measurement comprises: receiving minimization of drive tests (MDT) configuration information sent by a core network, wherein the MDT configuration information is used to configure user equipment (UE) to report, for MDT, measurement information of an access point (AP) of a wireless local area network (WLAN); and sending, according to the MDT configuration information, measurement configuration information to the UE, wherein the measurement configuration information is used to configure the UE to perform the measurement of the AP of the WLAN, and report the measurement information of the AP of the WLAN. In embodiments of the present disclosure, measurement information of a WLAN reported by UE for MDT required by a core network can be ascertained by receiving MDT configuration information sent by the core network and sending measurement configuration information to the UE according to the MDT configuration information, and the UE is then configured to perform a corresponding measurement and report a result.

## Description

### TECHNICAL FIELD

The present disclosure generally relates to the field of communication technology, and more particularly, to a method and an apparatus for configuring a measurement, a method and an apparatus for reporting a measurement, and a base station, a user equipment as well as a computer storage medium.

### BACKGROUND

Drive test is one of the most commonly used test methods for road wireless signals in the communications industry. The drive test can reflect the status of the network, play a direct role in measuring and evaluating network performance indicators, and identify network problems. Traditional network optimization is performed based on drive test data, network data such as level and quality, is collected by drive test instruments, then network problems are discovered by analyzing these data, and network optimizations are further performed for areas with the network problems. However, much manpower, material resources and financial investment are often required in this mentioned method, which also requires very high experience requirements for network optimization personnel. The Minimization of Drive Tests (MDT) technology defined by the 3rd Generation Partnership Project (3GPP) mainly uses measurement reports reported by mobile phones to obtain relevant parameters required for the network optimizations. Through the MDT technology, the following technical effects can be realized: 1) reducing drive test overhead and shortening the optimization cycle, thereby reducing network optimization and maintenance costs for mobile communication operators; 2) it is capable of collecting the measurement information of the whole area that cannot be performed by traditional drive test manner, such as the measurement information of narrow roads, forests and private places, therefore, the network performance can be evaluated more objectively, and the results of the network evaluation can be closer to the user experience, resulting in higher user satisfaction; 3) amounts of traditional drive test measurement can be reduced, which can implement reduction of carbon dioxide emissions and the environment protection

In order to make the MDT more effective, its current application scenarios mainly include coverage optimization, capacity optimization, mobile optimization, and Quality of Service (QoS) assurance, etc.

At present, the MDT technology is mainly applied in outdoor scenarios. In the outdoor scenarios, user equipment (UE) can position itself accurately depending on the Global Positioning System (GPS for short) and report the position information. Nevertheless, with the development of the mobile communication technology, more and more mobile communications and traffic occur indoors, and additionally, more and more Bluetooth devices and Wireless Fidelity (referred to as WIFI) networking devices are deployed indoors. Thus, the traditional MDT technology faces challenges. For example, the GPS positioning operation that traditional MDT relies on fails to work properly indoors, resulting in inaccurate positioning. Therefore, how to apply the MDT technology in indoor scenarios becomes a technical problem to be solved. This problem may be solved by recording and reporting the information of surrounding Bluetooth devices and/or WIFI devices by the UE. While in the existing MDT mechanism, the core network cannot configure the UE to perform measurement on a Wireless Local Area Network (WLAN) or otherwise. As such, the UE cannot perform MDT measurements on a specific WLAN.

### SUMMARY

Accordingly, the present disclosure provides a method and an apparatus for configuring a measurement, a method and an apparatus for reporting a measurement, and a base station, a user equipment as well as a computer storage medium, to enable the base station to learn that the core network needs the UE to report the measurement information of WLAN for the MDT, and thereby configure the UE to perform corresponding measurement and result reporting.

According to a first aspect of embodiments of the present disclosure, there is provided a method for configuring a measurement, applied to a base station, the method including:
receiving minimization of drive test (MDT) configuration information from a core network, the MDT configuration information being arranged to configure a user equipment (UE) to report MDT measurement information of a wireless local area network (WLAN) access point (AP); and
transmitting measurement configuration information to the UE according to the MDT configuration information, the measurement configuration information being arranged to configure the UE to measure the WLAN AP, and report measurement information of the WLAN AP.

In an embodiment of the present disclosure, the method further includes:

transmitting the MDT configuration information to a target base station, to enable the target base station to transmit, according to the MDT configuration information, the measurement configuration information to the UE in a cell where the target base station is located.

In an embodiment of the present disclosure, the MDT configuration information includes first MDT configuration information or second MDT configuration information, the first MDT configuration information being arranged to configure the UE to report a service set identifier (SSID) or a basic service set identifier (BSSID) of the WLAN AP associated with the MDT, and the second MDT configuration information being arranged to configure the UE to report a received signal strength indication (RSSI) and a round trip time (RTT) of the WLAN AP associated with MDT.

In an embodiment of the present disclosure, receiving the MDT configuration information from the core network, includes:
receiving the first MDT configuration information through MDT configuration signaling of an interface application protocol S1AP between the core network and the base station, wherein the first MDT configuration information is added into a measurements to activate information unit of the MDT configuration signaling of the S1AP; or
receiving the second MDT configuration information through MDT configuration signaling of the interface application protocol S1AP between the core network and the base station, wherein the second MDT configuration information is added into the measurements to activate information unit of the MDT configuration signaling of the S1AP.

In an embodiment of the present disclosure, transmitting the MDT configuration information to the target base station, includes:
transmitting the first MDT configuration information to the target base station through MDT configuration signaling of an interface application protocol X2AP between the base station and the target base station, wherein the first MDT configuration information is added into a measurements to activate information unit of the MDT configuration signaling of the X2AP; or
transmitting the second MDT configuration information to the target base station through MDT configuration signaling of the interface application protocol X2AP between the base station and the target base station, wherein the second MDT configuration information is added into the measurements to activate information unit of the MDT configuration signaling of the X2AP.

In an embodiment of the present disclosure, the measurement configuration information is further arranged to configure a reporting trigger condition for measurement information of the WLAN AP, the reporting trigger condition including at least one wireless measurement event.

In an embodiment of the present disclosure, the at least one wireless measurement event comprises one or more new wireless measurement events or a plurality of existing wireless measurement events, the new wireless measurement events including at least one of the following: a WLAN signal being lower than a first threshold value; or an adjacent WLAN signal being higher than a current WLAN signal by more than a second threshold value.

According to a second aspect of embodiments of the present disclosure, there is provided a method for reporting a measurement, applied to a user equipment (UE), the method including:
receiving measurement configuration information from a base station, the measurement configuration information being arranged to configure the UE to measure a wireless local area network (WLAN) access point (AP), and report measurement information of the WLAN AP;
measuring the WLAN AP according to the measurement configuration information; and
reporting the measurement information of the WLAN AP.

In an embodiment of the present disclosure, the measurement information of the WLAN AP comprises a service set identifier (SSID) or a basic service set identifier (BSSID) of the WLAN AP, or, a received signal strength indication (RSSI) and a round trip time (RTT) of the WLAN AP.

In an embodiment of the present disclosure, the measurement configuration information is further arranged to configure a reporting trigger condition for measurement information of the WLAN AP, the reporting trigger condition including at least one wireless measurement event.

In an embodiment of the present disclosure, reporting the measurement information of the WLAN AP includes:
reporting the measurement information of the WLAN AP in response to that a current condition satisfies the reporting trigger condition.

In an embodiment of the present disclosure, the at least one wireless measurement event includes one or more new wireless measurement events or a plurality of existing wireless measurement events, the new wireless measurement events including at least one of the following: a WLAN signal being lower than a first threshold value, or an adjacent WLAN signal being higher than a current WLAN signal by more than a second threshold value.

According to a third aspect of embodiments of the present disclosure, there is provided an apparatus for configuring a measurement, applied to a based station, including:
a receiving module, configured to receive minimization of drive test (MDT) configuration information from a core network, the MDT configuration information being arranged to configure a user equipment (UE) to report measurement information of a wireless local area network (WLAN) access point (AP) for MDT; and
a first transmitting module, configured to transmit measurement configuration information to the UE according to the MDT configuration information received by the receiving module, the measurement configuration information is arranged to configure the UE to measure the WLAN AP, and report measurement information of the WLAN AP

In an embodiment of the present disclosure, the apparatus further includes:
a second transmitting module, configured to transmit the MDT configuration information to a target base station after the MDT configuration information being received by the receiving module, to enable the target base station to transmit, according to the MDT configuration information the measurement configuration information to the UE in a cell where the target base station is located.

In an embodiment of the present disclosure, the MDT configuration information comprises first MDT configuration information or second MDT configuration information, the first MDT configuration information being arranged to configure the UE to report a service set identifier (SSID) or a basic service set identifier (BSSID) of the WLAN AP for the MDT, and the second MDT configuration information being arranged to configure the UE to report a received signal strength indication (RSSI) and a round trip time (RTT) of the WLAN AP for the MDT.

In an embodiment of the present disclosure, the receiving module includes:
a first receiving submodule, configured to receive the first MDT configuration information through MDT configuration signaling of an interface application protocol S1AP between the core network and the base station, wherein the first MDT configuration information is added into a measurements to activate information unit of the MDT configuration signaling of the S1AP; or
a second receiving submodule, configured to receive the second MDT configuration information through MDT configuration signaling of the interface application protocol S1AP between the core network and the base station, wherein the second MDT configuration information is added into the measurements to activate information unit of the MDT configuration signaling of the S1AP.

In an embodiment of the present disclosure, the second transmitting module includes:
a first transmitting submodule, configured to transmit the first MDT configuration information to the target base station through MDT configuration signaling of an interface application protocol X2AP between the base station and the target base station, wherein the first MDT configuration information is added into a measurements to activate information unit of the MDT configuration signaling of the X2AP; or
a second transmitting submodule, configured to transmit the second MDT configuration information to the target base station through MDT configuration signaling of an interface application protocol X2AP between the base station and the target base station, wherein the second MDT configuration information is added into a measurements to activate information unit of the MDT configuration signaling of the X2AP.

In an embodiment of the present disclosure, the measurement configuration information is further arranged to configure a reporting trigger condition for measurement information of the WLAN AP, the reporting trigger condition including at least one wireless measurement event.

In an embodiment of the present disclosure, the at least one wireless measurement event comprises one or more new wireless measurement events or a plurality of existing wireless measurement events, the new wireless measurement events including at least one of the following: a WLAN signal being lower than a first threshold value; or an adjacent WLAN signal being higher than a current WLAN signal by more than a second threshold value

According to a fourth aspect of embodiments of the present disclosure, there is provided an apparatus for reporting a measurement, applied to a user equipment (UE), the apparatus including:
a receiving module, configured to receive measurement configuration information from a base station, the measurement configuration information being arranged to configure the UE to measure a wireless local area network (WLAN) access point (AP), and report measurement information of the WLAN AP;
a measuring module, configured to measure the WLAN AP according to the measurement configuration information received by the receiving module;
a reporting module, configured to report the measurement information of the WLAN AP measured by the measuring module.

In an embodiment of the present disclosure, the measurement information of the WLAN AP comprises a service set identifier (SSID) or a basic service set identifier (BSSID) of the WLAN AP, or, a received signal strength indication (RSSI) and a round trip time (RTT) of the WLAN AP.

In an embodiment of the present disclosure, the measurement configuration information is further arranged to configure a reporting trigger condition for measurement information of the WLAN AP, the reporting trigger condition including at least one wireless measurement event.

In an embodiment of the present disclosure, the reporting module is further configured to:
report the measurement information of the WLAN AP when a current condition satisfies the reporting trigger condition.

In an embodiment of the present disclosure, the at least one wireless measurement event includes one or more new wireless measurement events or a plurality of existing wireless measurement events, the new wireless measurement events including at least one of the following: a WLAN signal being lower than a first threshold value, or an adjacent WLAN signal being higher than a current WLAN signal by more than a second threshold value.

According to a fifth aspect of embodiments of the present disclosure, there is provided a base station including:
a processor;
a memory storing a computer program executable by the processor;
wherein the processor is configured to:
receive minimization of drive test (MDT) configuration information from a core network, the MDT configuration information being arranged to configure a user equipment (UE) to report measurement information of a wireless local area network (WLAN) access point (AP) for MDT; and
transmit measurement configuration information to the UE according to the MDT configuration information, the measurement configuration information being arranged to configure the UE to measure the WLAN AP, and report measurement information of the WLAN AP

According to a sixth aspect of embodiments of the present disclosure, there is provided a user equipment (UE) including:
a processor;
a memory storing a computer program executable by the processor;
wherein the processor is configured to:
receive measurement configuration information from a base station, the measurement configuration information being arranged to configure the UE to measure a wireless local area network (WLAN) access point (AP), and report measurement information of the WLAN AP;
measure the WLAN AP according to the measurement configuration information; and
report the measurement information of the WLAN AP.

According to a seventh aspect of embodiments of the present disclosure, there is provided a computer storage medium having stored thereon computer executable instructions that, when executed by a processor, cause operations of the method for configuring a measurement described above to be performed.

According to an eighth aspect of embodiments of the present disclosure, there is provided a computer storage medium having stored thereon computer executable instructions that, when executed by a processor, cause operations of the method for reporting a measurement described above to be performed.

Technical solutions provided by embodiments of the present disclosure may include the following beneficial effects.

The base station receives the MDT configuration information from the core network, and transmits the measurement configuration information to the UE according to the MDT configuration information. Thus, the base station may learn that the core network needs the UE to report the measurement information of WLAN for the MDT, and thereby configure the UE to perform corresponding measurement and result reporting.
the UE receives the measurement configuration information from the base station, measures the WLAN AP according to the measurement configuration information, and reports the measurement information of the WLAN AP, which implements the MDT measurement for the WLAN by the UE.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a flow chart showing a method for configuring a measurement, according to an exemplary embodiment.
FIG. 2 is a flow chart showing another method for configuring a measurement, according to an exemplary embodiment.
FIG. 3 is a flow chart showing a method for reporting a measurement, according to an exemplary embodiment.
FIG. 4 is a signaling flow chart showing a method for reporting a measurement, according to an exemplary embodiment.
FIG. 5 is a block diagram illustrating an apparatus for configuring a measurement, according to an exemplary embodiment.
FIG. 6 is a block diagram illustrating another apparatus for configuring a measurement, according to an exemplary embodiment.
FIG. 7 is a block diagram illustrating another apparatus for configuring a measurement, according to an exemplary embodiment.
FIG. 8 is a block diagram illustrating another apparatus for configuring a measurement, according to an exemplary embodiment.
FIG. 9 is a block diagram illustrating an apparatus for reporting a measurement, according to an exemplary embodiment.
FIG. 10 is a block diagram illustrating an apparatus adapted for measurement configuration, according to an exemplary embodiment.
FIG. 11 is a block diagram illustrating an apparatus adapted for measurement reporting, according to an exemplary embodiment.

### DETAILED DESCRIPTION

Reference will now be made in detail to exemplary embodiments, examples of which are illustrated in the accompanying drawings. The following description refers to the accompanying drawings in which the same reference numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

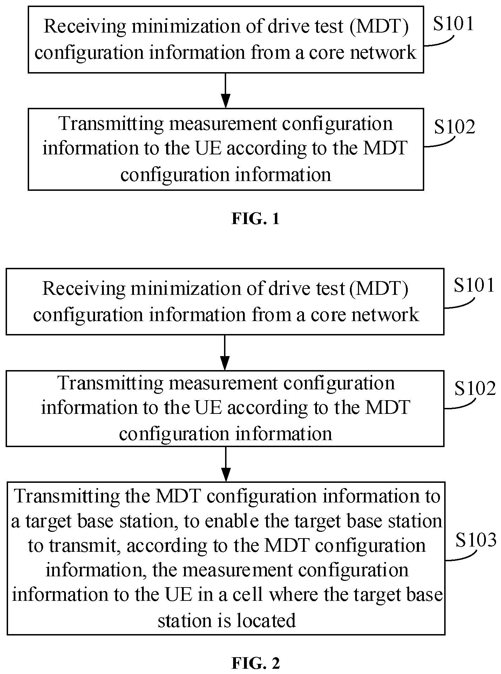

FIG. 1 is a flow chart showing a method for configuring a measurement, according to an exemplary embodiment, which is described from a base station side. As shown in FIG. 1, the method for configuring a measurement includes steps S101 and S102.

In step S101, a base station receives MDT configuration information from a core network, wherein the MDT configuration information is arranged to configure a UE to report measurement information of a WLAN access point (AP) for MDT.

Herein, the MDT configuration information may include first MDT configuration information or second MDT configuration information. The first MDT configuration information is arranged to configure the UE to report a service set identifier (SSID) or a basic service set identifier (BSSID) of the WLAN AP for the MDT. The second MDT configuration information is arranged to configure the UE to report a received signal strength indication (RSSI) and a round trip time (RTT) of the WLAN AP for the MDT.

In this embodiment, the following manners may be applied for receiving the MDT configuration information from the core network.

Manner 11): the base station receives the first MDT configuration information through MDT configuration signaling of an interface application protocol S1AP between the core network and the base station, wherein the first MDT configuration information is added into a measurements to activate information unit of the MDT configuration signaling of the S1AP.

Manner 12): the base station receives the second MDT configuration information through the MDT configuration signaling of the S1AP, wherein the second MDT configuration information is added into the measurements to activate information unit of the MDT configuration signaling of the S1AP.

In this embodiment, the first MDT configuration information or the second MDT configuration information may be received through the MDT configuration signaling of the S1AP, thereby configuring the UE to report different measurement information.

In step S102, the base station transmits measurement configuration information to the UE according to the MDT configuration information. The measurement configuration information is arranged to configure the UE to measure the WLAN AP, and report measurement information of the WLAN AP.

Alternatively, the measurement configuration information may be further arranged to configure a reporting trigger condition for measurement information of the WLAN AP, wherein the reporting trigger condition may include at least one wireless measurement event. The at least one wireless measurement event may include one or more new wireless measurement events or a plurality of existing wireless measurement events. The new wireless measurement events may include at least one of the following: a WLAN signal being lower than a first threshold value; or, an adjacent WLAN signal being higher than a current WLAN signal by more than a second threshold value. The existing wireless measurement time may include but is not limited to the following: the WLAN signal being higher than a third threshold value; all WLAN signals in a WLAN mobile set being lower than a fourth threshold value, and one WLAN signal outside the WLAN mobile set being higher than a fifth threshold value; all WLAN signals in the WLAN mobile set being lower than a sixth threshold value.

Herein, the first threshold value, the second threshold value, the third threshold value, the fourth threshold value, the fifth threshold value and the sixth threshold value may be flexibly set as necessary.

In the aforementioned embodiment, the base station receives the MDT configuration information from the core network, and transmits the measurement configuration information to the UE according to the MDT configuration information. Thus, the base station may learn that the core network needs the UE to report the measurement information of WLAN for the MDT, thereby configuring the UE to perform corresponding measurement and result reporting.

FIG. 2 is a flow chart showing another method for configuring a measurement, according to an exemplary embodiment. As shown in FIG. 2, after the step S101 described above, the method may further include step S103.

In step S103, the base station transmits the MDT configuration information to a target base station, to enable the target base station to transmit, according to the MDT configuration information, the measurement configuration information to the UE in a cell where the target base station is located.

Herein, the MDT configuration information may include first MDT configuration information or second MDT configuration information. The first MDT configuration information is arranged to configure the UE to report a service set identifier (SSID) or a basic service set identifier (BSSID) of the WLAN AP for the MDT. The second MDT configuration information is arranged to configure the UE to report a received signal strength indication (RSSI) and a round trip time (RTT) of the WLAN AP for the MDT.

Herein, the following manners may be applied for transmitting the MDT configuration information to the target base station.

Manner 21): the base station transmits the first MDT configuration information to the target base station through MDT configuration signaling of an interface application protocol X2AP between the base station and the target base station, wherein the first MDT configuration information is added into a measurements to activate information unit of the MDT configuration signaling of the X2AP.

Manner 22): the base station transmits the second MDT configuration information to the target base station through the MDT configuration signaling of the X2AP, wherein the second MDT configuration information is added into the measurements to activate information unit of the MDT configuration signaling of the X2AP.

In this embodiment, the first MDT configuration information or the second MDT configuration information may be transmitted to the target base station through the MDT configuration signaling of the X2AP, such that the target base station may transmit different measurement configuration information to the UE in the cell where the target base station is located.

After receiving the measurement configuration information from the target base station, the UE (in the cell where the target base station is located) may measure the WLAN AP according to the measurement configuration information, and report measurement information of the WLAN AP.

In the aforementioned embodiment, the base station transmits the MDT configuration information to a target base station, to enable the target base station to transmit, according to the MDT configuration information, the measurement configuration information to the UE in the cell where the target base station is located. Thus, the base station may configure the UE in the cell (where the target base station is located) to perform corresponding measurement and result reporting.

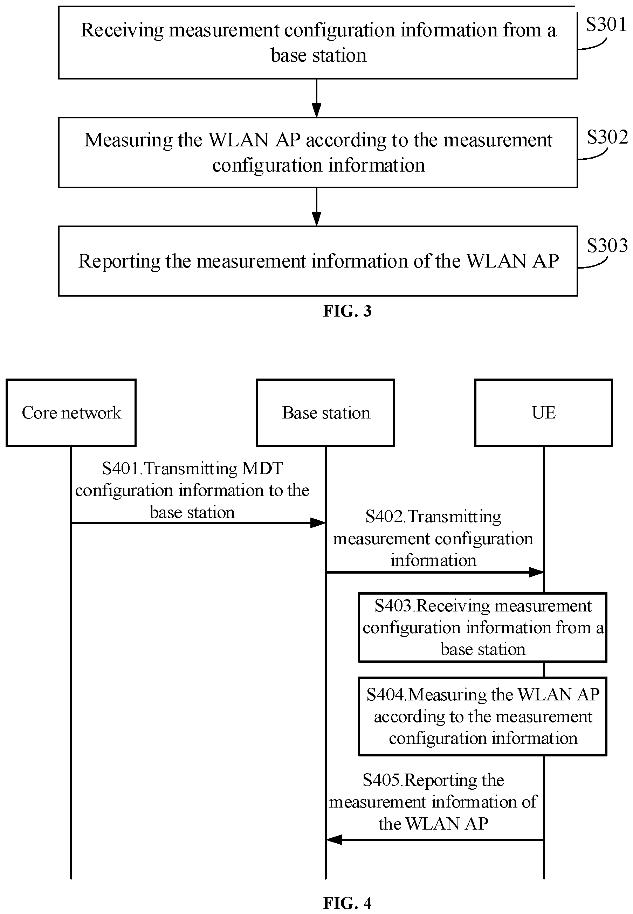

FIG. 3 is a flow chart showing a method for reporting a measurement, according to an exemplary embodiment, which is described from a UE side. As shown in FIG. 3, the method includes steps S301 to S303.

In step S301, a UE receives measurement configuration information from a base station, wherein the measurement configuration information is arranged to configure the UE to measure a WLAN AP, and report measurement information of the WLAN AP.

Herein, the measurement information of the WLAN AP may include a SSID or a BSSID of the WLAN AP, or include a RSSI and a RTT of the WLAN AP.

Alternatively, the measurement configuration information may be further arranged to configure a reporting trigger condition for measurement information of the WLAN AP, wherein the reporting trigger condition may include at least one wireless measurement event. The at least one wireless measurement event may include one or more new wireless measurement events or a plurality of existing wireless measurement events. The new wireless measurement events may include at least one of the following: a WLAN signal being lower than a first threshold value; or, an adjacent WLAN signal being higher than a current WLAN signal by more than a second threshold value. The existing wireless measurement time may include but is not limited to the following: the WLAN signal being higher than a third threshold value; all WLAN signals in a WLAN mobile set being lower than a fourth threshold value, and one WLAN signal outside the WLAN mobile set being higher than a fifth threshold value; all WLAN signals in the WLAN mobile set being lower than a sixth threshold value.

Herein, the first threshold value, the second threshold value, the third threshold value, the fourth threshold value, the fifth threshold value and the sixth threshold value may be flexibly set as necessary.

In step S302, the UE measures the WLAN AP according to the measurement configuration information.

In step S303, the UE reports the measurement information of the WLAN AP.

In this embodiment, if the measurement configuration information is further arranged to configure a reporting trigger condition for measurement information of the WLAN AP, the UE will report the measurement information of the WLAN AP in response to that a current condition satisfies the reporting trigger condition.

In the aforementioned embodiment, the UE receives the measurement configuration information from the base station, measures the WLAN AP according to the measurement configuration information, and reports the measurement information of the WLAN AP, which allows the UE to perform the MDT measurement for the WLAN.

FIG. 4 is a signaling flow chart showing a method for reporting a measurement, according to an exemplary embodiment, which is described in respect to interactions among the core network, the base station and the UE. As shown in FIG. 4, the method for reporting a measurement includes steps S401 to S405.

In step S401, the core network transmits the MDT configuration information to the base station, wherein the MDT configuration information is arranged to configure a UE to report measurement information of a WLAN access point (AP) for MDT.

In step S402, the base station transmits the measurement configuration information to the UE according to the received MDT configuration information, wherein the measurement configuration information is arranged to configure the UE to measure a WLAN AP, and report measurement information of the WLAN AP.

In step S403, the UE receives the measurement configuration information from the base station.

In step S404, the UE measures the WLAN AP according to the measurement configuration information.

In step S405, the UE reports measurement information of the WLAN AP.

In the aforementioned embodiment, the interactions among the core network, the base station and the UE, enable the base station to learn that the core network needs the UE to report the measurement information of WLAN for the MDT, thereby configuring the UE to perform corresponding measurement and result reporting.

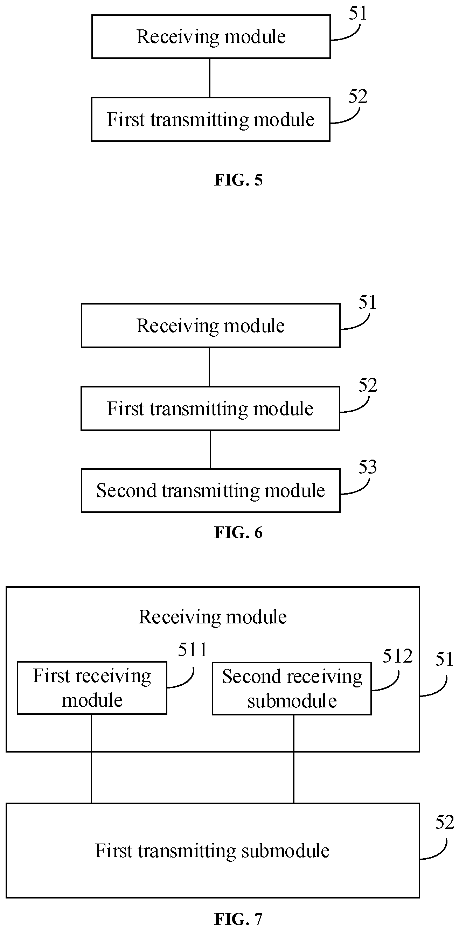

FIG. 5 is a schematic diagram illustrating an apparatus for configuring a measurement, according to an exemplary embodiment, which may be located into the base station. As shown in FIG. 5, the apparatus includes a receiving module 51 and a first transmitting module 52.

The receiving module 51 is configured to receive minimization of drive test (MDT) configuration information from a core network, wherein the MDT configuration information is arranged to configure a UE to report measurement information of a wireless local area network (WLAN) access point (AP) for MDT.

Herein, the MDT configuration information may include first MDT configuration information or second MDT configuration information. The first MDT configuration information is arranged to configure the UE to report a service set identifier (SSID) or a basic service set identifier (BSSID) of the WLAN AP for the MDT. The second MDT configuration information is arranged to configure the UE to report a received signal strength indication (RSSI) and a round trip time (RTT) of the WLAN AP for the MDT.

The first transmitting module 52 is configured to transmit measurement configuration information to the UE according to the MDT configuration information received by the receiving module 51, wherein the measurement configuration information is arranged to configure the UE to measure the WLAN AP, and report measurement information of the WLAN AP.

Alternatively, the measurement configuration information may be further arranged to configure a reporting trigger condition for measurement information of the WLAN AP, wherein the reporting trigger condition may include at least one wireless measurement event. The at least one wireless measurement event may include one or more new wireless measurement events or a plurality of existing wireless measurement events. The new wireless measurement events may include at least one of the following: a WLAN signal being lower than a first threshold value; or, an adjacent WLAN signal being higher than a current WLAN signal by more than a second threshold value. The existing wireless measurement time may include but is not limited to the following: the WLAN signal being higher than a third threshold value; all WLAN signals in a WLAN mobile set being lower than a fourth threshold value, and one WLAN signal outside the WLAN mobile set being higher than a fifth threshold value; all WLAN signals in the WLAN mobile set being lower than a sixth threshold value.

Herein, the first threshold value, the second threshold value, the third threshold value, the fourth threshold value, the fifth threshold value and the sixth threshold value may be flexibly set as necessary.

In the aforementioned embodiment, the base station receives the MDT configuration information from the core network, and transmits the measurement configuration information to the UE according to the MDT configuration information. Thus, the base station may learn that the core network needs the UE to report the measurement information of WLAN for the MDT, thereby configuring the UE to perform corresponding measurement and result reporting.

FIG. 6 is a schematic diagram illustrating another apparatus for configuring a measurement, according to an exemplary embodiment. As shown in FIG. 6, on the basis of the embodiment shown in FIG. 5 above, the apparatus may further include a second transmitting module 53.

The second transmitting module 53 is configured to transmit the MDT configuration information to a target base station after the MDT configuration information is received by the receiving module 51, to enable the target base station to transmit, according to the MDT configuration information, the measurement configuration information to the UE in a cell where the target base station is located.

After receiving the measurement configuration information from the target base station, the UE (in the cell where the target base station is located) may measure the WLAN AP according to the measurement configuration information, and report measurement information of the WLAN AP.

In the aforementioned embodiment, the base station transmits the MDT configuration information to a target base station, to enable the target base station to transmit, according to the MDT configuration information, the measurement configuration information to the UE in the cell where the target base station is located. Thus, the base station may configure the UE in the cell (where the target base station is located) to perform corresponding measurement and result reporting.

FIG. 7 is a schematic diagram illustrating another apparatus for configuring a measurement, according to an exemplary embodiment. As shown in FIG. 7, on the basis of the embodiment shown in FIG. 5 above, the receiving module 51 may include a first receiving submodule 511 or a second receiving submodule 512.

The first receiving submodule 511 is configured to receive the first MDT configuration information through MDT configuration signaling of an interface application protocol S1AP between the core network and the base station, wherein the first MDT configuration information is added into a measurements to activate information unit of the MDT configuration signaling of the S1AP.

The second receiving submodule 512 is configured to receive the second MDT configuration information through MDT configuration signaling of the interface application protocol S1AP between the core network and the base station, wherein the second MDT configuration information is added into the measurements to activate information unit of the MDT configuration signaling of the S1AP.

In the aforementioned embodiment, the first MDT configuration information or the second MDT configuration information may be received through the MDT configuration signaling of the S1AP, thereby configuring the UE to report different measurement information.

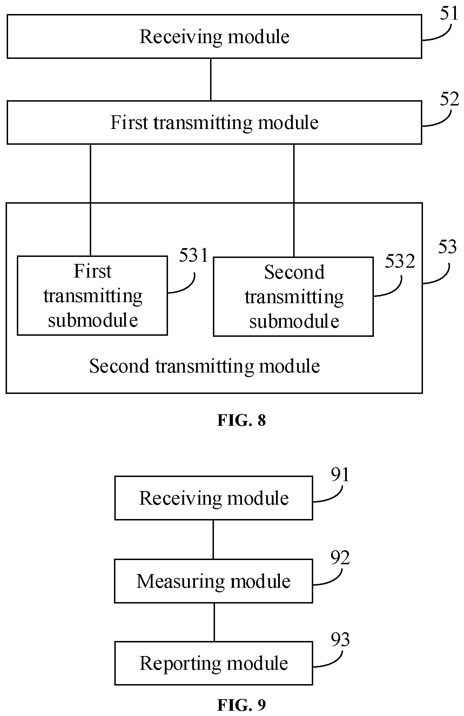

FIG. 8 is a schematic diagram illustrating another apparatus for configuring a measurement, according to an exemplary embodiment. As shown in FIG. 8, on the basis of the embodiment shown in FIG. 6 above, the second transmitting module 53 may include a first transmitting submodule 531 or a second transmitting submodule 532.

The first transmitting submodule 531 is configured to transmit the first MDT configuration information to the target base station through MDT configuration signaling of an interface application protocol X2AP between the base station and the target base station, wherein the first MDT configuration information is added into a measurements to activate information unit of the MDT configuration signaling of the X2AP.

The second transmitting 532 submodule is configured to transmit the second MDT configuration information to the target base station through MDT configuration signaling of the interface application protocol X2AP between the base station and the target base station, wherein the second MDT configuration information is added into the measurements to activate information unit of the MDT configuration signaling of the X2AP.

In the aforementioned embodiment, the first MDT configuration information or the second MDT configuration information may be transmitted to the target base station through the MDT configuration signaling of the X2AP, such that the target base station may transmit different measurement configuration information to the UE in the cell where the target base station is located.

FIG. 9 is a schematic diagram illustrating an apparatus for reporting a measurement, according to an exemplary embodiment, which may be located in a UE. As shown in FIG. 9, the apparatus includes a receiving module 91, a measuring module 92 and a reporting module 93.

The receiving module 91 is configured to receive measurement configuration information from a base station, wherein the measurement configuration information is arranged to configure the UE to measure a WLAN access point (AP), and report measurement information of the WLAN AP.

Herein, the measurement information of the WLAN AP may include a SSID or a BSSID of the WLAN AP, or include a RSSI and a RTT of the WLAN AP.

Alternatively, the measurement configuration information may be further arranged to configure a reporting trigger condition for measurement information of the WLAN AP, wherein the reporting trigger condition may include at least one wireless measurement event. The at least one wireless measurement event includes one or more new wireless measurement events or a plurality of existing wireless measurement events. The new wireless measurement events include at least one of the following: a WLAN signal being lower than a first threshold value; or, an adjacent WLAN signal being higher than a current WLAN signal by more than a second threshold value. The existing wireless measurement time may include but is not limited to the following: the WLAN signal being higher than a third threshold value; all WLAN signals in a WLAN mobile set being lower than a fourth threshold value, and one WLAN signal outside the WLAN mobile set being higher than a fifth threshold value; all WLAN signals in the WLAN mobile set being lower than a sixth threshold value.

Herein, the first threshold value, the second threshold value, the third threshold value, the fourth threshold value, the fifth threshold value and the sixth threshold value may be flexibly set as necessary.

The measuring module 92 is configured to measure the WLAN AP according to the measurement configuration information received by the receiving module 91.

The reporting module 93 is configured to report the measurement information of the WLAN AP measured by the measuring module 92.

In this embodiment, if the measurement configuration information is further arranged to configure a reporting trigger condition for measurement information of the WLAN AP, the reporting module 93 may be configured to report the measurement information of the WLAN AP in response to that a current condition satisfies the reporting trigger condition.

In the aforementioned embodiment, the UE receives the measurement configuration information from the base station, measures the WLAN AP according to the measurement configuration information, and reports the measurement information of the WLAN AP, which allows the UE to perform the MDT measurement for the WLAN.

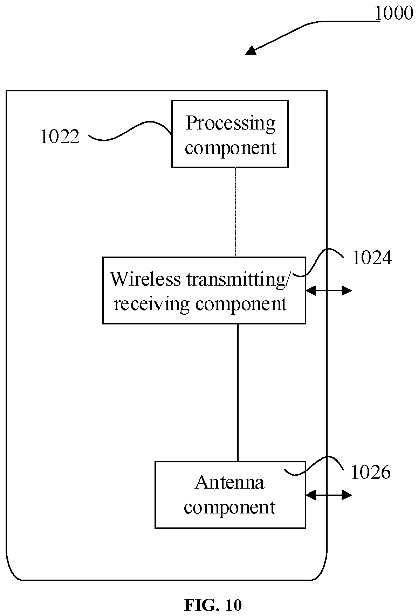

FIG. 10 is a schematic diagram illustrating another apparatus adapted for measurement configuration, according to an exemplary embodiment. An apparatus 1000 may be provided as a base station. Referring to FIG. 10, the apparatus 1000 may include a processing component 1022, a wireless transmitting/receiving component 1024, an antenna component 1026, and a signal processing part specific to a wireless interface. In addition, the processing component 1022 may further include one or more processors.

One processor of the processing component 1022 may be configured to:
receive minimization of drive test (MDT) configuration information from a core network, wherein the MDT configuration information is arranged to configure a user equipment (UE) to report measurement information of a wireless local area network (WLAN) access point (AP) for MDT; and
transmit measurement configuration information to the UE according to the MDT configuration information, wherein the measurement configuration information is arranged to configure the UE to measure the WLAN AP, and report measurement information of the WLAN AP.

An exemplary embodiment of the present disclosure also provides a non-transitory computer-readable storage medium having stored therein an executable program that when being executed by the processing component 1022 of the apparatus 1000; implement the method for configuring a measurement of any abovementioned embodiment. For example, the non-transitory computer-readable storage medium may be a Read-Only Memory (ROM), a Random Access Memory (RAM), a Compact Disc Read-Only Memory (CD-ROM), a magnetic tape, a floppy disc, an optical data storage device, and the like.

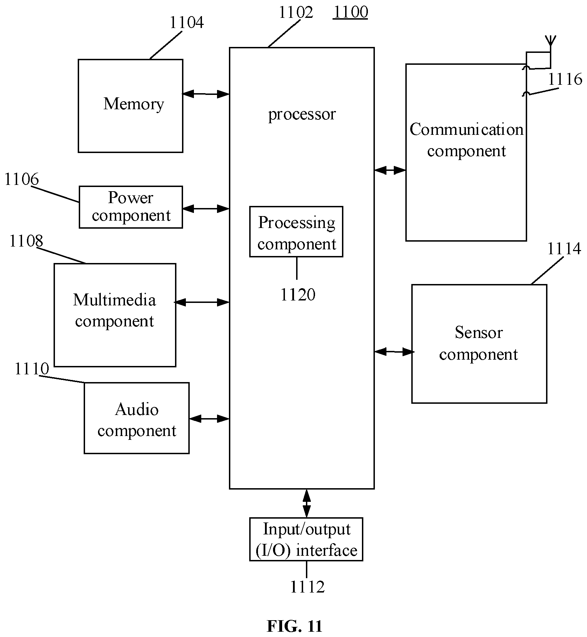

FIG. 11 is a schematic diagram illustrating an apparatus adapted for measurement reporting, according to an exemplary embodiment. For example, the apparatus 1100 may be a mobile phone, a computer, a digital broadcast terminal, a messaging device, a gaming console, a tablet, a medical device, exercise equipment, a personal digital assistant, and the like.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

One processor 1120 of the processing component 1102 may be configured to:
receive measurement configuration information from a base station, wherein the measurement configuration information is arranged to configure the UE to measure a WLAN access point (AP), and report measurement information of the WLAN AP;
measure the WLAN AP according to the measurement configuration information; and
report the measurement information of the WLAN AP.

The memory 1104 is configured to store various types of data to support the operation of the apparatus 1100. Examples of such data include instructions for any applications or methods operated on the apparatus 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the apparatus 1100 and other apparatuses. The apparatus 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the apparatus 1100, for performing the above-described methods. For example, the non-transitory computer-readable storage medium may be a ROM, a CD-ROM, a magnetic tape, a floppy disc, an optical data storage device, and the like.

As for embodiments of the apparatus, since it basically corresponds to the method embodiments, the relevant parts can be referred to the part of the description of the method embodiments. The embodiments of the apparatus described above are only illustrative. The units described as separate components may or may not be physically separated, and the components displayed as units may or may not be physical units, that is, they may be located in one place, or distributed to multiple network units. Some or all of the modules may be selected according to actual needs to realize the objectives of the solutions of the embodiments. Those of ordinary skill in the art can understand and implement it without creative work.

It should be noted that in present disclosure, relational terms such as "first" and "second" are only used to distinguish one entity or operation from another entity or operation, and do not necessarily require or imply any such actual relationship or order between these entities or operations. The terms "include", "comprise" or any other variants thereof, are intended to cover non-exclusive inclusion, such that a process, method, article or device including a series of elements includes not only those elements, but also other elements which are not explicitly listed, or also includes elements inherent to such process, method, article, or device. If there are no more restrictions, the element defined by the sentence "including a..." does not exclude the existence of other identical elements in the process, method, article, or device including the element.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for configuring a measurement, applied to a base station, comprising:
receiving minimization of drive test (MDT) configuration information from a core network, the MDT configuration information being arranged to configure a user equipment (UE) to report MDT measurement information of a wireless local area network (WLAN) access point (AP); and
transmitting measurement configuration information to the UE according to the MDT configuration information, the measurement configuration information being arranged to configure the UE to measure the WLAN AP, and report measurement information of the WLAN AP.

2. The method of claim 1, further comprising:
transmitting the MDT configuration information to a target base station to enable the target base station to transmit, according to the MDT configuration information, the measurement configuration information to the UE in a cell where the target base station is located.

3. The method of claim 1 or 2, wherein the MDT configuration information comprises first MDT configuration information or second MDT configuration information, the first MDT configuration information being arranged to configure the UE to report a service set identifier (SSID) or a basic service set identifier (BSSID) of the WLAN AP associated with the MDT, and the second MDT configuration information being arranged to configure the UE to report a received signal strength indication (RSSI) and a round trip time (RTT) of the WLAN AP associated with the MDT.

4. The method of claim 3, wherein receiving the MDT configuration information from the core network comprises:
receiving the first MDT configuration information through MDT configuration signaling of an interface application protocol S1AP between the core network and the base station, wherein the first MDT configuration information is added into a measurements to activate information unit of the MDT configuration signaling of the S1AP; or
receiving the second MDT configuration information through the MDT configuration signaling of the interface application protocol S1AP between the core network and the base station, wherein the second MDT configuration information is added into the measurements to activate information unit of the MDT configuration signaling of the S1AP.

5. The method of claim 3, wherein transmitting the MDT configuration information to the target base station, comprises:
transmitting the first MDT configuration information to the target base station through MDT configuration signaling of an interface application protocol X2AP between the base station and the target base station, wherein the first MDT configuration information is added into measurements to activate information unit of the MDT configuration signaling of the X2AP; or
transmitting the second MDT configuration information to the target base station through the MDT configuration signaling of the interface application protocol X2AP between the base station and the target base station, wherein the second MDT configuration information is added into the measurements to activate information unit of the MDT configuration signaling of the X2AP.

6. The method of claim 1, wherein the measurement configuration information is further arranged to configure a reporting trigger condition for measurement information of the WLAN AP, the reporting trigger condition comprising at least one wireless measurement event.

7. The method of claim 6, wherein the at least one wireless measurement event comprises one or more new wireless measurement events or a plurality of existing wireless measurement events, the new wireless measurement events comprising at least one of the following:
a WLAN signal being lower than a first threshold value, or
an adjacent WLAN signal being higher than a current WLAN signal by more than a second threshold value.

8. A method for reporting a measurement, applied to a user equipment (UE), comprising:
receiving measurement configuration information from a base station, the measurement configuration information being arranged to configure the UE to measure a wireless local area network (WLAN) access point (AP), and report measurement information of the WLAN AP;
measuring the WLAN AP according to the measurement configuration information; and
reporting the measurement information of the WLAN AP.

9. The method of claim 8, wherein the measurement information of the WLAN AP comprises:
a service set identifier (SSID) or a basic service set identifier (BSSID) of the WLAN AP, or,
a received signal strength indication (RSSI) and a round trip time (RTT) of the WLAN AP.

10. The method of claim 8 or 9, wherein the measurement configuration information is further arranged to configure a reporting trigger condition for measurement information of the WLAN AP, the reporting trigger condition comprising at least one wireless measurement event.

11. The method of claim 10, wherein reporting the measurement information of the WLAN AP comprises:
reporting the measurement information of the WLAN AP in response to that a current condition satisfies the reporting trigger condition.

12. The method of claim 10, wherein the at least one wireless measurement event comprises one or more new wireless measurement events or a plurality of existing wireless measurement events, the new wireless measurement events comprising at least one of the following:
a WLAN signal being lower than a first threshold value, or
an adjacent WLAN signal being higher than a current WLAN signal by more than a second threshold value.

13. An apparatus for configuring a measurement, applied to a based station, the apparatus comprising:
a receiving module, configured to receive minimization of drive test (MDT) configuration information from a core network, the MDT configuration information being arranged to configure a user equipment (UE) to report measurement information of a wireless local area network (WLAN) access point (AP) for MDT; and
a first transmitting module, configured to transmit measurement configuration information to the UE according to the MDT configuration information received by the receiving module, the measurement configuration information is arranged to configure the UE to measure the WLAN AP, and report measurement information of the WLAN AP.

14. The apparatus of claim 13, further comprising:
a second transmitting module, configured to transmit the MDT configuration information to a target base station after the MDT configuration information is received by the receiving module, to enable the target base station to transmit, according to the MDT configuration information, the measurement configuration information to the UE in a cell where the target base station is located.

15. The apparatus of claim 13 or 14, wherein the MDT configuration information comprises first MDT configuration information or second MDT configuration information, the first MDT configuration information being arranged to configure the UE to report a service set identifier (SSID) or a basic service set identifier (BSSID) of the WLAN AP for the MDT, and the second MDT configuration information being arranged to configure the UE to report a received signal strength indication (RSSI) and a round trip time (RTT) of the WLAN AP for the MDT.

16. The apparatus of claim 15, wherein the receiving module comprises:
a first receiving submodule, configured to receive the first MDT configuration information through MDT configuration signaling of an interface application protocol S1AP between the core network and the base station, wherein the first MDT configuration information is added into a measurements to activate information unit of the MDT configuration signaling of the S1AP; or
a second receiving submodule, configured to receive the second MDT configuration information through MDT configuration signaling of the interface application protocol S1AP between the core network and the base station, wherein the second MDT configuration information is added into the measurements to activate information unit of the MDT configuration signaling of the S1AP.

17. The apparatus of claim 15, wherein the second transmitting module comprises:
a first transmitting submodule, configured to transmit the first MDT configuration information to the target base station through MDT configuration signaling of an interface application protocol X2AP between the base station and the target base station, wherein the first MDT configuration information is added into a measurements to activate information unit of the MDT configuration signaling of the X2AP; or
a second transmitting submodule, configured to transmit the second MDT configuration information to the target base station through MDT configuration signaling of the interface application protocol X2AP between the base station and the target base station, wherein the second MDT configuration information is added into the measurements to activate information unit of the MDT configuration signaling of the X2AP.

18. The apparatus of claim 13, wherein the measurement configuration information is further arranged to configure a reporting trigger condition for measurement information of the WLAN AP, the reporting trigger condition including at least one wireless measurement event.

19. The apparatus of claim 18, wherein the at least one wireless measurement event comprises one or more new wireless measurement events or a plurality of existing wireless measurement events, the new wireless measurement events including at least one of the following:
a WLAN signal being lower than a first threshold value, or
an adjacent WLAN signal being higher than a current WLAN signal by more than a second threshold value.

20. An apparatus for reporting a measurement, applied to a user equipment (UE), the apparatus comprising:
a receiving module, configured to receive measurement configuration information from a base station, the measurement configuration information being arranged to configure the UE to measure a wireless local area network (WLAN) access point (AP), and report measurement information of the WLAN AP;
a measuring module, configured to measure the WLAN AP according to the measurement configuration information received by the receiving module; and
a reporting module, configured to report the measurement information of the WLAN AP measured by the measuring module.

21. The apparatus of claim 20, wherein the measurement information of the WLAN AP comprises a service set identifier (SSID) or a basic service set identifier (BSSID) of the WLAN AP, or, a received signal strength indication (RSSI) and a round trip time (RTT) of the WLAN AP.

22. The apparatus of claim 20 or 21, wherein the measurement configuration information is further arranged to configure a reporting trigger condition for measurement information of the WLAN AP, the reporting trigger condition including at least one wireless measurement event.

23. The apparatus of claim 22, wherein the reporting module is further configured to:
report the measurement information of the WLAN AP in response to that a current condition satisfies the reporting trigger condition.

24. The apparatus of claim 22, wherein the at least one wireless measurement event comprises one or more new wireless measurement events or a plurality of existing wireless measurement events, the new wireless measurement events including at least one of the following:
a WLAN signal being lower than a first threshold value, or
an adjacent WLAN signal being higher than a current WLAN signal by more than a second threshold value.

25. Abase station, comprising:
a processor;
a memory storing a computer program executable by the processor;
wherein the processor is configured to:
receive minimization of drive test (MDT) configuration information from a core network, wherein the MDT configuration information is arranged to configure a user equipment (UE) to report MDT measurement information of a wireless local area network (WLAN) access point (AP);
transmit measurement configuration information to the UE according to the MDT configuration information, wherein the measurement configuration information is arranged to configure the UE to measure the WLAN AP, and report measurement information of the WLAN AP.

26. A user equipment (UE), comprising:
a processor;
a memory storing a computer program executable by the processor;
wherein the processor is configured to:
receive measurement configuration information from a base station, wherein the measurement configuration information is arranged to configure the UE to measure a wireless local area network (WLAN) access point (AP), and report measurement information of the WLAN AP;
measure the WLAN AP according to the measurement configuration information; and
report the measurement information of the WLAN AP.

27. A computer storage medium having stored thereon computer executable instructions that, when executed by a processor, cause operations of the method of any one of claims 1 to 7 to be performed.

28. A computer storage medium having stored thereon computer executable instructions that, when executed by a processor, cause operations of the method of any one of claims 8 to 12 to be performed.
